# DEMANDE DE BREVET EUROPEEN

(11) **EP 1 902 785 A1**
(43) Date de publication de la demande: **26.03.2008**
(21) Numéro de dépôt: 07116596.3
(22) Date de dépôt: 17.09.2007
(51) Int. Cl.: B05B 7/14, B05B 13/06, C23C 24/02, F02B 77/02

(54) **Dispositif de projection de particules solides à froid**

(30) Priorité: 25.09.2006 FR 0653921
(71) Demandeur: PEUGEOT CITROËN AUTOMOBILES S.A., 78140 Vélizy Villacoublay (FR)
(72) Inventeur: Douchy, Guillaume, 90110 Saint Germain le Châtelet (FR); Bordes, Jean-Michel, 25700 Valentigney (FR); Liao, Hanlin, 90300 Cravanche (FR)
(74) Mandataire: Allain, Laurent

(57) **Abrégé**

L'invention se rapporte à un dispositif (1) de projection de particules solides à froid, muni d'un pistolet (2) de forme allongée, comprenant un canal d'alimentation (4) en particules solides, un conduit d'arrivée (3) d'un gaz propulseur sous pression, et une buse (10), ledit canal (4) et ledit conduit (3) étant mis en communication au niveau d'une zone d'intersection (8) située en amont de la buse (10).

La principale caractéristique d'un dispositif selon l'invention, est que ledit canal (4) et ledit conduit (3) se rejoignent au niveau de la zone d'intersection (8), en étant situés dans le prolongement l'un de l'autre suivant l'axe longitudinal du pistolet (2), de sorte que le flux de particules et le flux gazeux progressent dans la même direction mais en sens opposé avant de se mélanger dans ladite zone (8), et la buse (10) prolonge la zone d'intersection (8) suivant une direction latérale par rapport audit axe.

## Description

Le domaine technique de l'invention concerne les dispositifs de projection à froid de particules solides constituées, par exemple, de métal, de polymère, ou d'alliage, dans le but d'effectuer un traitement de surface. Les dispositifs selon l'invention sont particulièrement adaptés à la mise en oeuvre, sous la forme d'un revêtement, de chemises sur la paroi interne des fûts de carters cylindres.

Contrairement aux techniques classiques de projection thermique, la projection à froid est basée sur la déformation plastique de particules sur un substrat. En effet, au lieu de fournir principalement une énergie thermique aux particules comme dans les autres procédés de projection, lesdites particules reçoivent une grande énergie cinétique et, au moment de leur impact sur le substrat, elles se déforment plastiquement pour adhérer audit substrat. Les particules ne sont donc plus fondues.

Les procédés et dispositifs de projection de particules à froid ont déjà fait l'objet de brevets. On peut citer, par exemple, le brevet US 5302414 qui se rapporte à un dispositif de projection de particules solides à froid, impliquant une conduite de gaz sous pression et une réserve de particules solides, lesdites particules étant progressivement versées dans le flux gazeux, puis expulsées vers la surface à traiter. De cette manière, ledit dispositif permet d'éjecter des particules solides à des vitesses comprises entre 300 et 1200m/s. Les brevets US 6502767 et US 6283386 divulguent, quant à eux, des dispositifs de projection de particules à froid, pour lesquels la buse est alimentée en particules solides par l'intermédiaire d'une tubulure débouchant à l'arrière de ladite buse, et pour lesquels lesdites particules sont expulsées au moyen d'un tube d'éjection allongé, placé dans le prolongement de ladite tubulure. Lesdits dispositifs ayant une forme particulièrement allongée, demeurent encombrants, et ne peuvent donc pas être introduits dans des espaces confinés. Cet encombrement réduit considérablement leur périmètre d'utilisation. Enfin, le brevet US 2002/0073982 décrit des dispositifs de projection de particules à froid, spécialement conçus pour chemiser les fûts de carters cylindres. Lesdits dispositifs présentent la particularité de posséder un tube d'éjection rotatif, faisant un angle de 30° avec l'axe longitudinal du fût. Le dispositif est donc placé à l'extérieur du fût, et le jet de particules pénètre à l'intérieur dudit fût. L'inconvénient de ce type de dispositif est qu'il assure une projection de particules avec un angle d'impact incontournable de 30° sur la paroi interne du fût, altérant de façon significative la qualité du dépôt desdites particules.

Afin de mieux comprendre la description, les termes « amont » et « aval » doivent être interprétés par rapport au sens de propagation des différents fluides impliqués dans le dispositif.

Les dispositifs de projection de particules solides à froid selon l'invention, permettent de résoudre les problèmes précités, en présentant une géométrie compacte peu encombrante, et en proposant une projection de particules, perpendiculaire à la surface à traiter. Lesdits dispositifs peuvent ainsi accéder à des endroits étroits et retirés, tout en assurant un dépôt de qualité satisfaisante.

La présente invention a pour objet un dispositif de projection de particules solides à froid, muni d'un pistolet de forme allongée, comprenant un canal d'alimentation en particules solides, un conduit d'arrivée d'un gaz propulseur sous pression et une buse, ledit canal et ledit conduit étant mis en communication au niveau d'une zone d'intersection située en amont de la buse. La principale caractéristique d'un dispositif selon l'invention, est que ledit canal et ledit conduit se rejoignent au niveau de la zone d'intersection en étant situés dans le prolongement l'un de l'autre suivant l'axe longitudinal du pistolet, de sorte que le flux de particules et le flux gazeux progressent dans la même direction mais en sens opposé avant de se mélanger dans ladite zone, et la buse prolonge la zone d'intersection suivant une direction latérale par rapport audit axe. L'axe longitudinal du pistolet est l'axe qui le traverse le long de sa plus grande dimension. Le canal et le conduit se font ainsi face dans la zone d'intersection, de sorte que les particules sont injectées dans ladite zone à contre-courant du gaz propulseur. Les particules sont alors ralenties dans ladite zone avant d'être emportées par le flux de gaz propulseur, puis expulsées par la buse. Cette introduction des particules dans le gaz en sens opposé, est préférable à une introduction latérale à 90°, dans la mesure où les particules ne peuvent pas venir impacter la paroi interne du conduit gazeux, évitant ainsi une détérioration de la buse et des rebonds successifs des particules avant éjection. Cette configuration particulière de mise au contact des particules avec le gaz propulseur, réduit significativement l'encombrement du dispositif, tout en permettant une projection latérale des particules solides. Le terme « direction latérale » doit être interprété comme signifiant une direction perpendiculaire à l'axe longitudinal du pistolet, plus ou moins 30°.

Avantageusement, le canal présente une partie de section réduite débouchant dans la zone d'intersection. De cette manière, les particules sont injectées dans la zone d'intersection de façon très localisée, améliorant ainsi les conditions de mélanges desdites particules dans le gaz, dans le but d'homogénéiser le jet de particules à expulser.

De façon préférentielle, l'axe longitudinal de la buse est perpendiculaire à la direction de propagation du gaz et des particules, juste avant leur mélange dans la zone d'intersection. Cette implantation perpendiculaire de la buse par rapport à l'axe longitudinal du pistolet, réduit l'encombrement du pistolet, en évitant notamment la mise en continuité du canal d'alimentation des particules avec la buse.

De façon avantageuse, la buse constitue le prolongement du conduit d'arrivée de gaz. Cet agencement de la buse et du conduit, simplifie la géométrie de circulation du gaz dans le pistolet, en évitant d'ajouter des pièces intermédiaires supplémentaires, sources d'encombrement et de coût.

Préférentiellement, le conduit de gaz présente un premier coude permettant de relier un segment amont à un segment aval perpendiculaires entre eux, de sorte que :
- a) ledit coude constitue la zone d'intersection dans laquelle débouche le canal de particules,
- b) le segment amont est situé dans le prolongement du canal de particules et achemine le gaz propulseur vers la zone d'intersection,
- c) le segment aval constitue la buse grâce à laquelle les particules, mises en mouvement par le gaz, sont projetées contre la surface à traiter.

Selon un mode de réalisation préféré de l'invention, le segment amont et le coude ont une section circulaire identique dont le diamètre est supérieur à la largeur de la partie du canal d'arrivée des particules débouchant dans la zone d'intersection, assurant la prédominance du flux de gaz propulseur sur le flux de particules.

Avantageusement, la buse possède un col d'étranglement situé à proximité de la zone d'intersection, ledit col étant prolongé par une partie divergente débouchant à l'extérieur du dispositif. Ce rétrécissement suivi d'un évasement progressif sur une longueur suffisante, contribue à accroître la vitesse d'expulsion des particules, en garantissant un écoulement sonique au col et supersonique dans la partie divergente.

De façon préférentielle, le conduit de gaz comporte un deuxième coude situé en amont du premier coude définissant la zone d'intersection, ledit deuxième coude permettant de relier un tronçon amont à un tronçon aval, parallèles entre eux, le tronçon aval correspondant au segment amont. De façon plus précise, le deuxième coude induit une pliure à 180° du conduit d'arrivée de gaz, si bien que le gaz circule dans les deux tronçons selon la même direction mais en sens opposé. Ainsi, la trajectoire du gaz propulseur subit un changement de direction à 180° avant de subir un deuxième changement de direction à 90°. Ce deuxième coude définit une configuration pour laquelle les gaz circulant dans le tronçon amont et les particules se propageant dans le canal en amont de la zone d'intersection, progressent selon une même direction et dans le même sens.

De façon avantageuse, les particules sont propulsées dans le canal par un moyen pneumatique. Avantageusement, ledit moyen pneumatique est constitué par une circulation d'air.

Préférentiellement, le gaz propulseur est constitué par de l'air, de l'azote ou de l'hélium sous pression.

De façon avantageuse, les particules sont en métal, en alliage ou en polymère. Elles peuvent également résulter d'un mélange de ces matériaux, ou être en céramique.

De façon avantageuse, la buse se termine par un embout comportant une pluralité d'orifices, de manière à élargir la surface d'impact des particules. Ledit embout peut, soit comporter plusieurs orifices de manière à engendrer des jets parallèles entre eux et indépendants, soit pulvériser les particules selon un nuage diffus.

Les dispositifs de projection de particules à froid selon l'invention, présentent l'avantage de pouvoir effectuer le dépôt d'un grand nombre de matériaux ayant une aptitude à la déformation plastique, augmentant les possibilités de revêtements envisageables par projection thermique. Ils présentent, de plus, l'avantage de pouvoir déposer des revêtements de porosité donnée, en maîtrisant le flux de particules ainsi que le temps d'application du dépôt desdites particules sur la paroi à traiter. Enfin, ils présentent l'avantage de diminuer globalement la masse du revêtement déposé, par rapport à la masse d'un revêtement équivalent, déposé en une seule pièce.

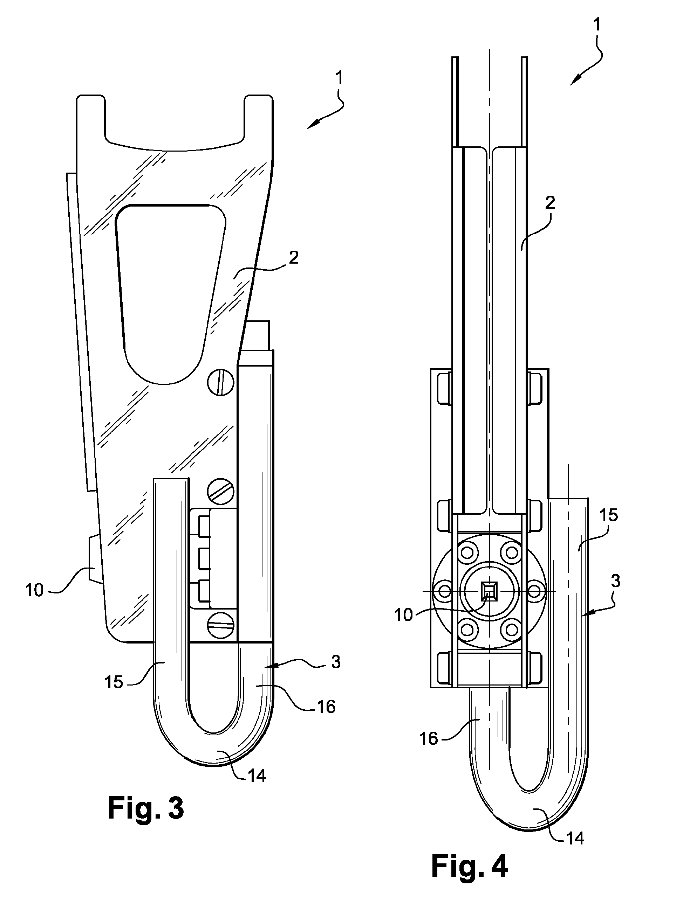

On donne ci-après une description détaillée d'un mode de réalisation préféré d'un dispositif de projection de particules à froid selon l'invention, en se référant aux figures 1 à 4.
- La figure 1 est une vue latérale en coupe d'un dispositif de projection selon l'invention.
- La figure 2 est une vue agrandie de la zone d'intersection entre le canal d'alimentation en particules et le conduit d'arrivée du gaz expulseur, visible sur la figure 1.
- La figure 3 est une vue latérale à 180° du dispositif de projection représenté à la figure 1.
- La figure 4 est une vue de face, à 90° du dispositif de la figure 1.
- La figure 5 est une vue en perspective partielle montrant l'utilisation d'un dispositif selon l'invention pour le revêtement de la paroi interne d'un cylindre.

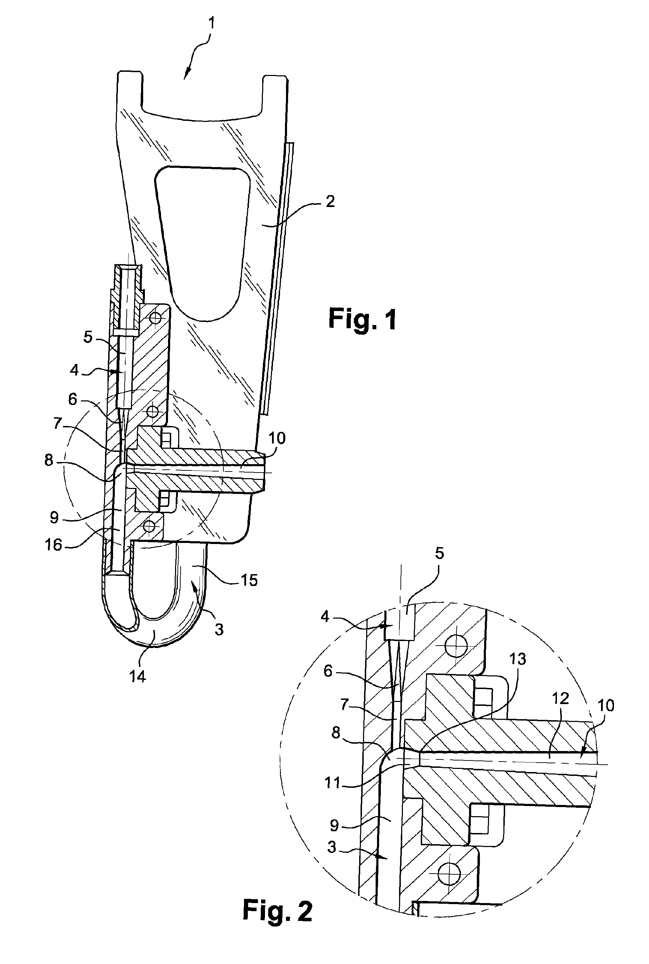

En se référant aux figures 1 et 2, un dispositif 1 de projection de particules solides à froid selon l'invention comprend un pistolet 2 de forme allongée comprenant un conduit 3 d'arrivée d'air sous pression et un canal d'alimentation 4 en particules solides. Lesdites particules sont mues dans ledit canal 4 au moyen d'une circulation d'air sous pression. Le canal 4 a la forme d'un cylindre droit dont l'axe de révolution est parallèle à l'axe longitudinal du pistolet 2, et présentant une partie amont 5 de diamètre élargi, prolongée par une partie intermédiaire 6 en forme de trémie se terminant par une partie aval 7 de section réduite et débouchant dans le conduit 3 d'arrivée d'air. Une pièce en forme de trémie signifie qu'elle est progressivement convergente, présentant notamment une partie circulaire élargie et une partie de section réduite en forme de rectangle. Ledit conduit 3 présente un premier coude 8 permettant de relier entre eux un segment amont 9 à un segment aval 10, lesdits segments 9,10 étant perpendiculaires entre eux. Le segment amont 9 a une section rectangulaire dont l'axe longitudinal est parallèle à l'axe longitudinal du pistolet 2, et la partie aval 7 du canal 4 d'alimentation en particules solides, débouche dans le coude 8 du conduit 3 en étant situé dans le prolongement dudit segment amont 9, dont la section est supérieure à celle de la partie aval 7 du canal 4. Ledit coude 8 représente ainsi une zone d'intersection dans laquelle les particules vont venir au contact du gaz propulseur. Le segment aval 10, prolonge le coude 8 selon une direction perpendiculaire à l'axe longitudinal du pistolet 2, et présente une partie amont 11 convergente en forme de pyramide tronquée, et une partie aval 12 divergente également en forme de pyramide tronquée et débouchant à l'extérieur du dispositif 1. La partie amont 11qui est située entre le coude 8 et la partie aval 12 a une longueur moins importante que celle de ladite partie aval 12. Ainsi, le segment aval 10 comporte donc un étranglement 13 séparant la partie amont 11 de la partie aval 12, et joue donc le rôle d'une buse d'éjection des particules, à écoulement supersonique. Le conduit 3 d'arrivée du gaz propulseur comporte un deuxième coude 14 situé en amont du coude 8 constituant la zone d'intersection entre le canal 4 des particules et ledit conduit 3, ledit deuxième coude 14 permettant de relier un tronçon amont 15 à un tronçon aval 16 parallèles entre eux et parallèles à l'axe longitudinal du pistolet 2. Le tronçon amont 15 a la forme d'un cylindre droit, tandis que le tronçon aval 16 a la forme d'un parallélépipède, et ledit coude 14 induit une pliure à 180° du conduit 3, de sorte que le gaz circule dans lesdits tronçons 15,16 suivant la même direction mais en sens opposé. Avec cette disposition particulière du deuxième coude 14, le gaz circule dans le tronçon amont 15 dans le même sens que celui des particules dans le canal 4 d'alimentation. Le tronçon aval 16 correspond au segment amont 9 du premier coude 8, de sorte que la trajectoire du gaz propulseur subit un changement de direction à 180° avant de subir un deuxième changement de direction à 90°.

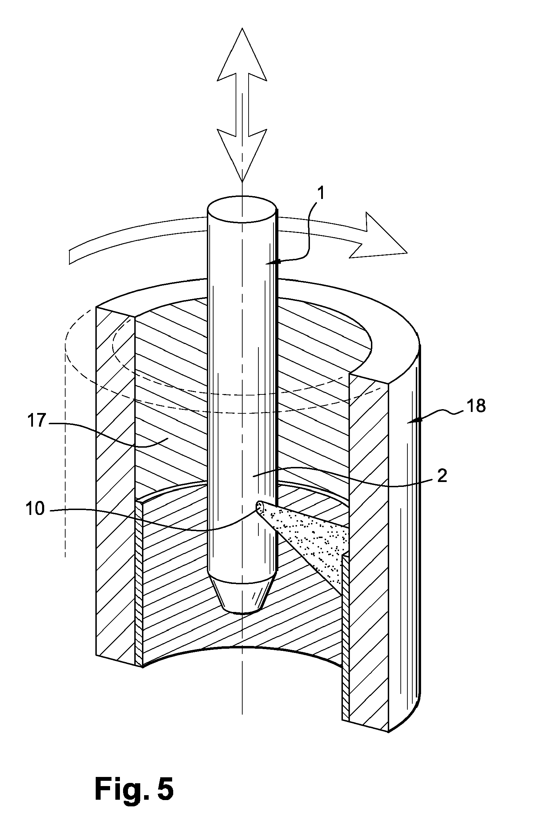

Le mode de fonctionnement d'un dispositif 1 de projection de particules selon l'invention s'effectue conformément au schéma de la figure 5.
Dans le cas, par exemple, du traitement de la paroi interne 17 d'un fût 18 de carter cylindre, le pistolet 2 est introduit dans ledit fût 18 de manière à ce que la buse 10 soit située à l'avant dudit pistolet 2. Les deux circuits 3,4 d'alimentation en particules et d'arrivée de gaz sont alors ouverts pour permettre auxdites particules de venir au contact du gaz propulseur dans la zone d'intersection 8, avant d'être expulsées selon une direction perpendiculaire à l'axe longitudinal du pistolet 2. De façon à tapisser l'intégralité de la surface interne du fût 18, le pistolet possède deux degrés de liberté de déplacement, matérialisés par les deux flèches de la figure 5:
- en rotation autour de l'axe longitudinal de la buse 2 de manière à balayer la totalité de la circonférence du fût 18,
- en translation le long dudit axe longitudinal, pour couvrir toute la hauteur dudit fût.

## Revendications

1. Dispositif (1) de projection de particules solides à froid, muni d'un pistolet (2) de forme allongée, comprenant un canal d'alimentation (4) en particules solides, un conduit d'arrivée (3) d'un gaz propulseur sous pression et une buse (10), ledit canal (4) et ledit conduit (3) étant mis en communication au niveau d'une zone d'intersection (8) située en amont de la buse (10), **caractérisé en ce que** ledit canal (4) et ledit conduit (3) se rejoignent au niveau de la zone d'intersection (8) en étant situés dans le prolongement l'un de l'autre suivant l'axe longitudinal du pistolet (2), de sorte que le flux de particules et le flux gazeux progressent dans la même direction mais en sens opposé avant de se mélanger dans ladite zone (8), et **en ce que** la buse (10) se présente sous la forme d'un conduit, et prolonge la zone d'intersection (8) suivant une direction latérale par rapport audit axe.

2. Dispositif selon la revendication 2 **caractérisé en ce que** le canal (4) présente une partie (7) de section réduite débouchant dans la zone d'intersection (8).

3. Dispositif selon l'une quelconque des revendications 1 ou 2, **caractérisé en ce que** l'axe longitudinal de la buse (10) est perpendiculaire à la direction de propagation du gaz et des particules, juste avant leur mélange dans la zone d'intersection (8).

4. Dispositif selon la revendication 3, **caractérisé en ce que** la buse (10) constitue le prolongement du conduit (3) d'arrivée de gaz.

5. Dispositif selon la revendication 4, **caractérisé en ce que** le conduit (3) de gaz présente un premier coude (8) permettant de relier un segment amont (9) à un segment aval (10) perpendiculaires entre eux, de sorte que :
a) le coude constitue la zone d'intersection (8) dans laquelle débouche le canal (4) de particules,
b) le segment amont (9) est situé dans le prolongement du canal (4) de particules et achemine le gaz propulseur vers la zone d'intersection (8),
c) le segment aval constitue la buse (10) grâce à laquelle les particules, mises en mouvement par le gaz, sont projetées contre la surface à traiter.

6. Dispositif selon la revendication 5, **caractérisé en ce que** la buse (10) possède un col d'étranglement (13) situé à proximité de la zone d'intersection (8), ledit col (13) étant prolongé par une partie divergente (12) débouchant à l'extérieur du dispositif (1).

7. Dispositif selon la revendication 5, **caractérisé en ce que** le conduit (3) de gaz comporte un deuxième coude (14) situé en amont du premier coude (8) définissant la zone d'intersection, ledit deuxième coude (14) permettant de relier un tronçon amont (15) à un tronçon aval (16), parallèles entre eux, ledit tronçon aval (16) correspondant au segment amont (9).

8. Dispositif selon la revendication 1 **caractérisé en ce que** les particules sont propulsées dans le canal (4) par un moyen pneumatique.

9. Dispositif selon la revendication 1 **caractérisé en ce que** le gaz propulseur est constitué par de l'air, de l'azote ou de l'hélium sous pression.

10. Dispositif selon la revendication 1, **caractérisé en ce que** les particules sont en métal, en alliage ou en polymère.

11. Dispositif selon la revendication 1, **caractérisé en ce que** la buse (10) se termine par un embout comportant une pluralité d'orifices, de manière à élargir la surface d'impact des particules.
